Europäisches Patentamt

(19) European Patent Office

Office européen des brevets

(11) **EP 0 512 126 B1**

(12) **EUROPÄISCHE PATENTSCHRIFT**

(45) Veröffentlichungstag und Bekanntmachung des Hinweises auf die Patenterteilung:
**31.01.1996 Patentblatt 1996/05**

(51) Int. Cl.⁶: **B25J 9/02**, B65G 47/91

(21) Anmeldenummer: **91107115.7**

(22) Anmeldetag: **02.05.1991**

(54) **Vorrichtung zur Handhabung von plattenförmigen Werkstücken**

Device for manipulating panel shaped workpieces

Dispositif pour la manutention de produits en feuilles

(84) Benannte Vertragsstaaten:
**DE ES FR GB IT**

(43) Veröffentlichungstag der Anmeldung:
**11.11.1992 Patentblatt 1992/46**

(73) Patentinhaber: **LIGMATECH MASCHINENBAU GmbH**
**D-09638 Lichtenberg (DE)**

(72) Erfinder:
• **Tönnigs, Bodo**
**O-9208 Lichtenberg (DE)**
• **Höppner, Gert**
**O-9209 Mulda (DE)**
• **Eckert, Peter**
**O-9201 Zug (DE)**

• **Kaden, Dietmar**
**O-9209 Mulda (DE)**
• **Kalmbach, Kurt**
**O-7296 Glatten (DE)**

(74) Vertreter: **Kohlmann, Karl Friedrich, Dipl.-Ing. et al**
**D-81904 München (DE)**

(56) Entgegenhaltungen:
**EP-A- 0 090 354          DE-A- 2 602 622**
**FR-A- 2 564 021**

• **PATENT ABSTRACTS OF JAPAN vol. 8, no. 69 (M-286)(1506) 31 März 1984, & JP-A- 58 216833 (MOCHIZUKI KIKAI SEISAKUSHO K.K.) 16 Dezember 1983,**

Printed by Rank Xerox (UK) Business Services
2.9.8/3.4

## Beschreibung

Die vorliegende Erfindung betrifft eine Vorrichtung zur Handhabung von plattenförmigen Werkstücken, mit einer vertikal verlaufenden Tragsäule, die in einer horizontalen Ebene in X-Richtung verfahrbar ist und einem an der Tragsäule in Z-Richtung auf- und abbewegbar geführten Tragschlitten.

Eine Handhabungsvorrichtung dieser Art ist z.B. aus JP-A-58216833 bekannt. Vergleichbare Handhabungsvorrichtungen werden zum Transport von Glasplatten (vgl. DE-OS 26 02 622) oder zum Zuführen von Blechplatten (DE-OS 23 08 419) zu Scheren oder dergleichen eingesetzt. Sie stellen Vorrichtungen dar, die für den jeweiligen Anwendungszweck jeweils speziell konzipiert und in der Regel nicht im integrierten Verbund mit Bearbeitungsmaschinen, sondern vielmehr isoliert für Einzelaufgaben, wie beispielsweise zum Abstapeln oder zur Zufuhr zu Bearbeitungsmaschinen eingesetzt werden.

Zur Bearbeitung von plattenförmigen Werkstücken aus Holz, Kunststoff, Verbundwerkstoffen oder dergleichen werden in zunehmendem Maße sogenannte Bearbeitungszentren eingesetzt. Im Gegensatz zu sogenannten Durchlaufmaschinen, bei denen die Werkstücke entlang einer geradlinigen Bearbeitungsstrecke bewegt und im Verlaufe dieser Bewegung zur Durchführung von hintereinander geschalteten Bearbeitungsvorgängen an den Bearbeitungsaggregaten vorbeibewegt werden, liegen die Werkstücke bei Bearbeitungszentren auf einem feststehenden Arbeitstisch fest, während die Bearbeitungsaggregate um die festliegenden Werkstücke herumgeführt bzw. relativ zu diesen zur Durchführung der Bearbeitungsvorgänge bewegt werden.

Diese Vorgehensweise erlaubt eine wirtschaftliche Fertigung kleiner Losgrößen, und insbesondere die Bearbeitung schwieriger Formen bei hoher Bearbeitungsgenauigkeit und exakter Reproduzierbarkeit.

Aufgabe der vorliegenden Erfindung ist es, eine Vorrichtung der eingangs genannten Art derart weiterzubilden, daß sie sich zur integrierten Handhabung von plattenförmigen Werkstücken aus Holz, Kunststoff, Verbundwerkstoffen oder dergleichen in Verbindung mit der Bearbeitung derartiger Werkstücke auf Bearbeitungszentren eignet.

Diese Aufgabe wird erfindungsgemäß durch folgende Merkmale gelöst:
Einen sich in einer horizontalen Ebene in X-Richtung erstreckenden Ausleger, der am Tragschlitten befestigt ist,
einen sich in horizontaler Ebene senkrecht zum Ausleger erstreckenden Tragarm, der am freien Ende des Auslegers derart angeordnet ist, daß er im wesentlichen über seine ganze Länge in horizontaler Ebene gegenüber dem Ausleger verschiebbar ist, und
einer mit Einzelsaugern ausgestatteten, um eine vertikale Achse (C-Achse) drehbare Saugtraverse, die am Tragarm beweglich angeordnet ist, so daß sie im wesentlichen über die ganze Länge des Tragarms verschiebbar ist.

Durch die erfindungsgemäße Merkmalskombination ist eine technisch relativ einfach aufgebaute Vorrichtung geschaffen, die im Betrieb relativ wenig Platz beansprucht, einfach zu steuern ist und relativ hohe Arbeitsgeschwindigkeiten zuläßt. Die großen Massen werden dabei unter Verzicht auf Schwenklösungen lediglich über Geradführungen bewegt, was sich konstruktiv und steuerungstechnisch einfach und präzise umsetzen läßt.

Vorrichtungen der erfindungsgemäßen Art eignen sich daher insbesondere zum voll- oder teilautomatischen Zuführen von unbearbeiteten und zum Abtransport von bearbeiteten Werkstücken zu bzw. von Bearbeitungszentren oder dergleichen Bearbeitungsmaschinen in Verbindung mit integrierten Speicher- oder Lageranordnungen.

Die Tragsäulen der Vorrichtungen können dabei an einer Boden- oder Deckenführung oder an Portal- oder Auslegeranordnungen in X-Richtung verfahrbar sein.

Für die Befestigung der Saugtraverse am Tragarm sind technisch eine Vielzahl von Lösungen denkbar. Vorteilhaft ist es, wenn die Saugtraverse an einem Transportkopf befestigt ist, der an dem Tragarm in Y2-Richtung verschiebbar geführt ist.

Um der erfindungsgemäßen Vorrichtung eine universelle Bewegbarkeit und Einsatzbarkeit zu verleihen, ist es vorteilhaft, den Transportkopf als Träger für verschiedene Einrichtungen einzusetzen, an denen dann die Saugtraverse angeordnet werden kann.

So ist es vorteilhaft, zwischen dem Transportkopf und der Saugtraverse einen Drehkranz anzuordnen, über den die Saugtraverse um die vertikale Achse, d.h. die C-Achse drehbar ist. Dadurch können die Werkstücke im Bedarfsfalle bei der Handhabung in bezug auf die C-Achse in jede beliebige Winkelstellung verbracht werden.

Der Drehkranz kann grundsätzlich in jeder beliebigen Weise ausgebildet sein. Vorteilhaft ist es, wenn der Drehkranz einen pneumatischen oder elektrischen Antrieb aufweist.

Gemäß einer besonders bevorzugten Ausführungsform der Erfindung ist zwischen dem Transportkopf und der Saugtraverse eine Tastanordnung vorgesehen. Eine derartige Tastanordnung ermöglicht eine automatische Positionierung der plattenförmigen Werkstücke auf dem Arbeitstisch des jeweiligen Bearbeitungsaggregates, beispielsweise an hierfür vorgesehenen Anschlägen.

Die Tastanordnung kann grundsätzlich in jeder beliebigen Weise ausgestaltet sein. Ein technisch besonders einfacher Aufbau läßt sich dann erreichen, wenn die Tastanordnung als Hauptbestandteil eine in einer horizontalen Ebene wirksame Kreuzschlittenanordnung aufweist.

Gemäß einem bevorzugten Ausführungsbeispiel besteht diese Kreuzschlittenanordnung aus einem in einer ersten Geradführung geführten ersten Schlitten, der eine zweite, senkrecht zur ersten Geradführung wirksame zweite Geradführung trägt, in der wiederum ein zweiter Schlitten geführt ist.

Vorteilhaft ist es dabei, wenn der erste und der zweite Schlitten über Federanordnungen in einer Ruhelage gehalten sind, aus der sie gegen die Kraft der Federanordnung über einen begrenzten Weg nach der einen oder anderen Richtung auslenkbar sind.

Soll ein Werkstück mit einer erfindungsgemäßen Vorrichtung positioniert werden, die mit einer Tastanordnung in Form einer derartigen Kreuzschlittenanordnung ausgestattet ist, so ist es lediglich erforderlich, den Tragarm in eine bestimmte, lediglich grob vorgegebene Stellung zu fahren. Die Feinpositionierung übernimmt dann die Kreuzschlittenanordnung, welche über die Federanordnung vorzugsweise in Verbindung mit auf dem Arbeitstisch angeordneten Anschlägen letztlich auf technisch einfache Weise die Hand einer Bedienungsperson nachahmt, welche das jeweilige plattenförmige Werkstück in der X- und der Y-Achse an den Anschlägen im Bereich des Arbeitstisches zur Anlage bringt.

Als Federanordnung kann eine mechanische oder auch pneumatische Federanordnung eingesetzt werden.

Gemäß einer bevorzugten Weiterbildung der Erfindung ist der zweite Schlitten der Kreuzschlittenanordnung mit einer Drehanordnung ausgestattet, an die die Saugtraverse ankoppelbar ist. Diese Drehanordnung besteht aus einer Drehplatte, die um eine vertikale Achse, vorzugsweise die C-Achse des Drehkranzes, in dem zweiten Schlitten über einen begrenzten Drehwinkel verdrehbar gelagert ist.

Die Anordnung ist bei dieser bevorzugten Weiterbildung derart getroffen, daß die Drehplatte über eine Federanordnung in einer Ruhelage gehalten ist, aus der sie gegen die Kraft der Federanordnung über den begrenzten Drehwinkel in der einen oder der anderen Drehrichtung auslenkbar ist. An die Drehplatte ist die Saugtraverse ankoppelbar. Die Federanordnung der Drehplatte kann dabei ebenfalls eine mechanische oder pneumatische Federanordnung sein.

Im Falle der Ausgestaltung des zweiten Schlittens der Kreuzschlittenanordnung mit einer Drehanordnung ergibt sich aufgrund des zusätzlichen Freiheitsgrades eine erhebliche Verbesserung der Tastsensibilität der Tastanordnung, die der Handbewegung einer Bedienungsperson beim Ausrichtvorgang, beispielsweise im Zusammenwirken mit den bereits erwähnten Anschlägen, noch näherkommt.

Eine Verbesserung der universellen Bewegbarkeit und Einsetzbarkeit wird bei einem bevorzugten Ausführungsbeispiel noch dadurch erreicht, daß zwischen dem Transportkopf und der Saugtraverse eine in einer horizontalen Ebene arbeitende Linearschlittenanordnung vorgesehen ist. Diese Linearschlittenanordnung kann grundsätzlich in jeder beliebigen Art und Weise aufgebaut sein. Ein besonders einfacher Aufbau ergibt sich, wenn die Linearschlittenanordnung eine Grundplatte aufweist, auf der eine Ankoppelungsplatte linear verschiebbar geführt ist. Diese Ankoppelungsplatte kann durch einen mechanischen, pneumatischen oder hydraulischen Stellantrieb gegenüber der Grundplatte verschiebbar sein. Dadurch ist es möglich, bestimmte Stellbewegungen für die plattenförmigen Werkstücke ohne Verschiebung der Tragsäule oder des Tragarmes, d.h. mit minimalen zu bewegenden Massen zu realisieren.

Vorteilhaft ist es, eine derartige Linearschlittenanordnung zusammen mit einer Drehanordnung einzusetzen, da dadurch die Linearverschiebung sowohl in der X- als auch in der Y-Achse bzw. in Sonderfällen auch in jeder beliebigen Winkellage vorgenommen werden kann.

Eine besonders universelle Bewegbarkeit und Einsatzbarkeit ergibt sich jedoch, wenn der Drehkranz, die Tastanordnung und die Linearschlittenanordnung in Kombination zueinander zwischen dem Transportkopf und der Saugtraverse angeordnet sind.

Bei der funktionell zweckmäßigsten Anordnung ist an dem Transportkopf erst der Drehkranz befestigt, welcher dann die Tastanordnung trägt, an der als drittes Element die Linearschlittenanordnung angeordnet ist, an welcher die Saugtraverse befestigt ist.

Vorrichtungen der erfindungsgemäßen Art eignen sich insbesondere für eine Mehrfachhandhabung von plattenförmigen Werkstücken, zur Mehrfachbeschickung bzw. zur Mehrfachbelegung von Bearbeitungsmaschinen, wie Bearbeitungszentren oder dergleichen. Gemäß einer bevorzugten Ausführungsform ist der Transportkopf auf seiner Unterseite mit einer sich vorzugsweise quer zum Tragarm, d.h. in X-Richtung erstreckenden Schlittenanordnung ausgerüstet, die mehrere, gegebenenfalls zueinander verfahrbare Saugtraversen trägt. Jede dieser Saugtraversen kann mit einem Drehkranz, einer Tastanordnung, einer Linearschlittenanordnung, einzeln oder in beliebiger Kombination ausgerüstet sein.

Grundsätzlich können die Saugtraversen in jeder beliebigen Weise an dem Transportkopf, dem Drehkranz, der Tastanordnung oder der Linearschlittenanordnung befestigt werden. Vorteilhaft ist es jedoch, wenn zur Befestigung eine Schnellwechseleinrichtung eingesetzt wird. Dadurch wird nicht nur der Wechselvorgang vereinfacht, sondern darüber hinaus auch im Bedarfsfalle ein automatischer Wechselvorgang in Verbindung mit einem Saugtraversenmagazin ermöglicht. Vorteilhaft ist es, wenn die Schnellwechseleinrichtung unmittelbar zwischen der Saugtraverse und der ersten Anordnung, d.h. je nach Ausstattung zwischen der Saugtraverse und der Linearschlittenanordnung, der Tastanordnung oder dem Drehkranz angeordnet ist.

Saugtraversen sind in den verschiedensten Ausführungsformen seit langem bekannt. Sie können aus einer Rahmen- oder aus einer Kreuzanordnung bestehen, die auf ihrer Unterseite eine Anzahl von Einzelsaugern trägt.

Dem jeweiligen Einzelfall bzw. der jeweiligen Plattenform und -art entsprechend, kann es vorteilhaft sein, die Einzelsauger einzeln, in Gruppen oder gemeinsam zu betätigen. Auch ist es gemäß einer vorteilhaften Weiterbildung der Erfindung zweckmäßig, die Einzelsauger zumindest teilweise mit einem Ausstellschlitten auszustatten, über die die Einzelsauger in vertikaler Richtung (Z1-Richtung) über einen bestimmten Weg aus- und einfahrbar sind.

Durch ein- und ausfahrbare Einzelsauger wird die Einsetzbarkeit einer derartigen Vorrichtung erheblich erhöht, weil dadurch auch eine automatischen Abfallbeseitigung realisiert werden kann, welche bisher ausschließlich von Hand erfolgen mußte. So ist es beispielsweise möglich, bei der Bearbeitung von plattenförmigen Werkstücken, bei denen ein rahmenförmiger Abfall anfällt, diesen rahmenförmigen Abfall über mit Ausstellschlitten ausgestattete Einzelsauger zu erfassen, in dieser Weise in jeder Bearbeitungsphase kontrolliert zu halten und im Bedarfsfalle getrennt vom eigentlichen Werkstück, beispielsweise zur Entsorgung, zu handhaben.

Grundsätzlich können die Ausstellschlitten in jeder beliebigen Weise betätigt werden. Vorteilhaft ist es jedoch, diese über pneumatische Einzelzylinder zu betätigen.

Grundsätzlich kann die Längsverschiebung des Tragarmes an dem Tragschlitten und das Längsverfahren des Transportkopfes am Tragarm jeweils über getrennte Antriebe erfolgen. Gemäß einem bevorzugten Ausführungsbeispiel der Erfindung sind jedoch zur Längsverschiebung des Tragarmes an dem Tragschlitten und zum Längsverfahren des Transportkopfes am Tragarm ein gemeinsamer Antrieb vorgesehen.

Gemäß einer vorteilhaften Weiterbildung umfaßt dieser gemeinsame Antrieb zwei Zahnriementriebe und einen Stellmotor. Der Stellmotor ist dabei am freien Ende des Auslegers angeordnet und wirkt über ein Antriebsritzel auf einen endlichen ersten Zahnriemen ein. Dieser erste endliche Zahnriemen erstreckt sich im wesentlichen parallel zum Tragarm und ist mit seinem einen Ende im Bereich des einen Stirnendes des Tragarmes und mit seinem anderen Ende im Bereich des anderen gegenüberliegenden Stirnendes des Tragarmes befestigt. Durch Antreiben des Antriebsritzels durch den Stellmotor kann somit der Tragarm am freien Ende des Auslegers geradlinig hin- und her-, d.h. nach der einen oder der anderen Seite ausgefahren werden.

Bei der bevorzugten Anordnung mit einem gemeinsamen Antrieb ist neben dem ersten Zahnriemen ein zweiter Zahnriemen vorgesehen. Dieser zweite Zahnriemen umschlingt zwei Umlenkrollen, die jeweils im Bereich der Stirnenden des Tragarmes angeordnet sind. Das Ober- und Untertrum des zwischen den beiden Umlenkrollen verlaufenden Zahnriemens erstreckt sich dabei jeweils parallel zur Längsachse des Tragarmes. Wesentlich ist dabei, daß das Obertrum an dem Ausleger festgelegt ist, während der Transportkopf an dem Untertrum angekuppelt ist. Aufgrund dieser Ausgestaltung bewegen sich bei Inbetriebsetzen des Stellmotors sowohl der Tragarm als auch der Transportkopf derart, daß sich der Transportkopf mit der doppelten Geschwindigkeit des Tragarmes bewegt und der Tragarm jeweils teleskopartig zu derjenigen Seite ausfährt, in deren Richtung der Transportkopf bewegt wird. Die beschriebene Anordnung ist technisch besonders einfach aufgebaut und aufgrund der Zahnriementriebe relativ leise. Da der Tragarm aufgrund des erfindungsgemäßen Antriebes beim Verfahrvorgang nur mit der halben Geschwindigkeit des Transportkopfes bewegt wird, ergeben sich bei Beschleunigungs- und Verzögerungsvorgängen günstige Verhältnisse, die auch hohe Arbeitsgeschwindigkeiten zulassen.

Der Ausleger kann in seiner Länge der jeweiligen zu bearbeitenden, maximalen Plattengröße entsprechend bemessen werden. Vorteilhaft ist es jedoch, wenn der Ausleger teleskopartig ein- und ausfahrbar gestaltet ist, und somit den jeweiligen Gegebenheiten stufenlos angepaßt werden kann.

Für bestimmte Abspeichervorgänge kann es erforderlich sein, die Werkstücke gegenüber der horizontalen Bearbeitungsebene zu kippen. Dieses Kippen kann technisch in verschiedenster Weise realisiert werden. Vorteilhaft ist es, wenn die Saugtraverse über ein Kippelement an dem Transportkopf angelenkt ist. Zweckmäßigerweise ist das Kippsegment direkt an dem Transportkopf befestigt und trägt den Drehkranz, die Tastanordnung und/oder die Linearschlittenanordnung, einzeln oder in beliebiger Kombination. Erst an der untersten Anordnung ist dann die Saugtraverse befestigt.

Im Falle von schnellen Verfahrbewegungen kann die freie Beweglichkeit der Tastanordnung hinderlich sein. Für solche Fälle ist es vorteilhaft, an der Tastanordnung eine Feststellanordnung vorzusehen, mit welcher die Bewegung der Saugtraverse und damit des Werkstückes gegenüber dem Transportkopf lediglich beim Positioniervorgang freigegeben, ansonsten, insbesondere bei den Verfahrbewegungen, jedoch gesperrt wird.

Im folgenden ist zur weiteren Erläuterung und zum besseren Verständnis ein Ausführungsbeispiel der Erfindung unter Bezugnahme auf die beigefügten Zeichnungen näher beschrieben und erläutert.

Figur 1 zeigt schematisch in einer perspektivischen Gesamtansicht eine Vorrichtung der erfindungsgemäßen Art, welche zwischen einem Bearbeitungszentrum und einer Speicheranordnung angeordnet ist,

Figur 2 zeigt schematisch die erfindungsgemäße Vorrichtung aus der Richtung des Pfeiles II in Fig. 1,

Figur 3 zeigt schematisch die Vorrichtung gemäß Fig. 2 in einer Ansicht aus der Richtung des Pfeiles III der Fig. 2,

Figur 4 zeigt schematisch einen Schnitt in der Ebene IV-IV der Fig. 3,

Figuren 5, 6 und 7 zeigen schematisch in einer Draufsicht und zwei Seitenansichten eine Tastanordnung in Form einer Kreuzschlittenanordnung, wie sie bei einer Vorrichtung nach den Figuren 1 bis 3 zum Einsatz kommt.

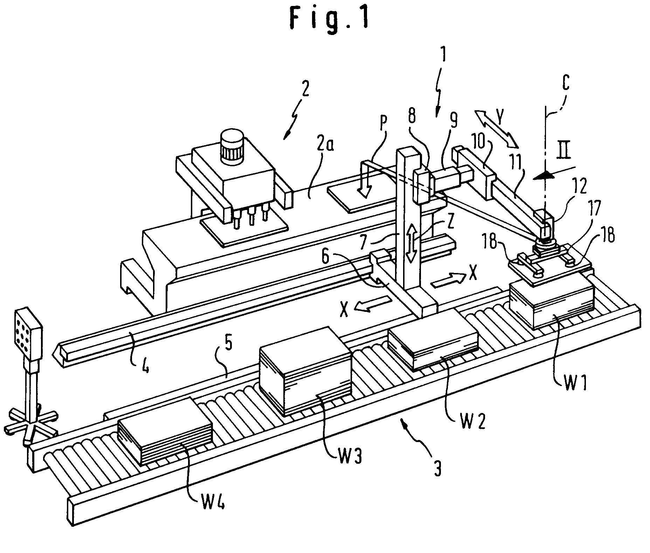

Bei der in Fig. 1 dargestellten perspektivischen Gesamtansicht ist die erfindungsgemäße Vorrichtung 1 zum Handhaben von plattenförmigen Werkstücken zwischen einem Bearbeitungszentrum 2 und einer Speicheranordnung 3 angeordnet.

Die erfindungsgemäße Vorrichtung 1 umfaßt parallel zueinander verlaufende Bodenschienen 4, 5, an denen ein Fuß 6 in X-Richtung in Richtung der Pfeile hin- und herverfahrbar ist. Auf dem Fuß 6 ist eine vertikal verlaufende Tragsäule 7 befestigt, an der ein Tragschlitten 8 vertikal, und damit in Z-Richtung auf- und abverfahrbar gelagert ist.

An dem Tragschlitten 8 ist in einer horizontalen Ebene in X-Richtung ein Ausleger 9 befestigt, der im vorliegenden Ausführungsbeispiel als Teleskopausleger ausgebildet ist.

Am freien Ende des Auslegers 9 ist eine Führungsanordnung 10 befestigt, in der in einer horizontalen Ebene ein Tragarm 11 senkrecht zum Ausleger 9, und damit in Y-Richtung hin- und herverfahrbar gelagert ist.

An dem Tragarm 11 ist ein Transportkopf 12 verschiebbar gelagert, der im Bereich seines unteren Endes eine Befestigungsplatte 13 trägt.

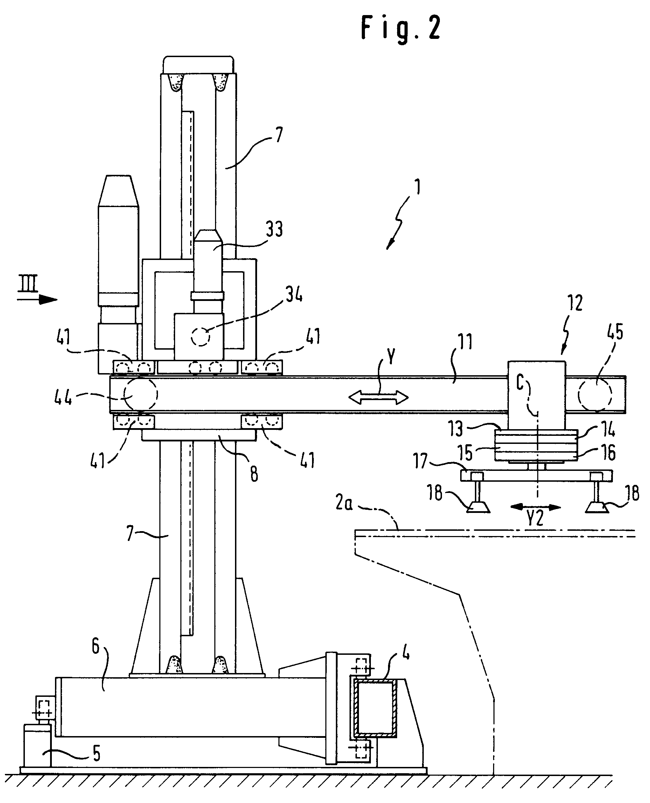

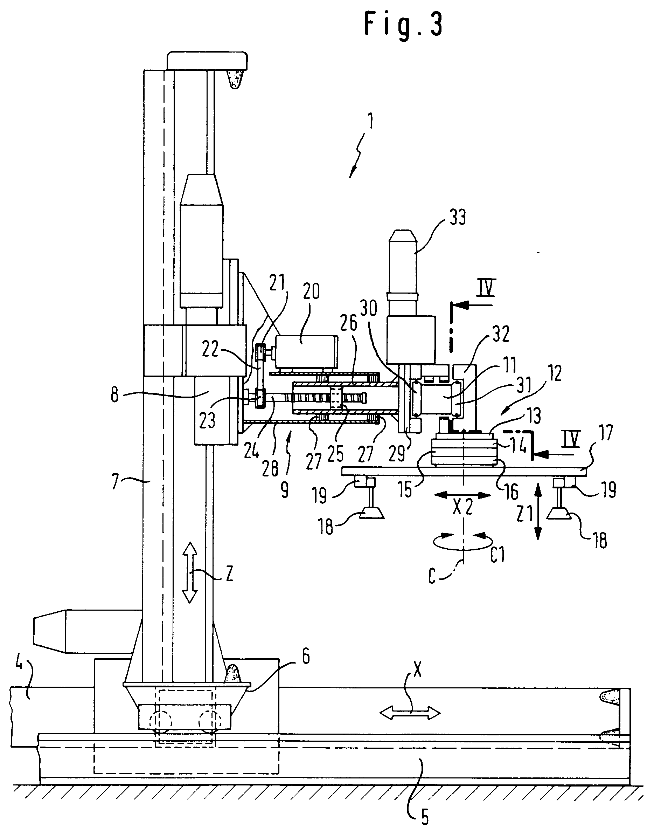

Wie aus den Figuren 2 und 3 hervorgeht, ist an der Befestigungsplatte 13 des Transportkopfes 12 ein Drehkranz 14 befestigt, der seinerseits auf seiner Unterseite eine Tastanordnung 15 trägt.

An der Unterseite der Tastanordnung 15 wiederum ist eine Linearschlittenanordnung 16 befestigt, die ihrerseits eine Saugtraverse 17 trägt, welche mit einer Anzahl von Einzelsaugern 18 ausgestattet ist. Die Einzelsauger 18 stehen jeweils mit einer nicht dargestellten Unterdruckwelle in Verbindung.

Die Speicheranordnung 3 besteht im vorliegenden Ausführungsbeispiel aus einer Rollenbahn, auf der Stapel von plattenförmigen Werkstücken angeordnet sind. Die Stapel W1 und W2 beinhalten zu bearbeitende Werkstücke.

Die Stapel W3 und W4 wiederum sind aus bereits fertigbearbeiteten Werkstücken gebildet.

Wie in Fig. 1 dargestellt, erfassen die Einzelsauger 18 der Saugtraverse 17 das oberste Werkstück aus dem Werkstückstapel W1 und verfahren es in Richtung des Pfeiles P. Am Ende dieser Verfahrbewegung wird das Werkstück auf der rechten Seite des langgestreckten Arbeitstisches 2a des Bearbeitungszentrums definiert abgelegt.

Ist die Bearbeitung durch das Bearbeitungszentrum durchgeführt, so wird das fertigbearbeitete Werkstück durch den Einzelsauger 18 der Saugtraverse 17 erneut erfaßt und über die erfindungsgemäße Vorrichtung auf dem Werkstückstapel W3 oder W4 abgelegt.

Aufgrund des langgestreckten Arbeitstisches 2a des Bearbeitungszentrums mit zwei oder auch mehr Arbeitsplätzen kann die erfindungsgemäße Vorrichtung während des Bearbeitungsvorganges am benachbarten Werkstück Handhabungsvorgänge durchführen, d.h. entweder auf einen freien Bearbeitungsplatz ein neues, noch zu bearbeitendes Werkstück aufsetzen, oder ein bereits bearbeitetes Werkstück aufnehmen und der Speicheranordnung 3 zuführen.

Wie in Fig. 3 schematisch dargestellt ist, ist jeder Einzelsauger 18 mit einem Ausstellschlitten 19 ausgestattet, über den der jeweilige Einzelsauger 18 in vertikaler Richtung über einen bestimmten Weg in Z1-Richtung ein- und ausfahrbar ist.

Wie bereits erwähnt, ist der Ausleger 9 teleskopartig ausgebildet. Aus Fig. 3 ist eine Ausführungsform einer derartigen Teleskopausbildung schematisch dargestellt. Diese besteht aus einem Stellmotor 20, der über ein Ritzel 21 und einen Riemen 22 ein Ritzel 23 antreibt, welches drehfest auf einer Spindel 24 befestigt ist, die sich im Inneren des Auslegers 9 in dessen Längsrichtung erstreckt, und eine Mutter 25 trägt, die an einem inneren Auslegerteil 26 befestigt ist. Das innere Auslegerteil 26 ist über Führungsringe 27 in einem äußeren Auslegerteil 28 hin- und herverschiebbar gelagert.

Am freien Ende des teleskopartigen Auslegers 9 ist eine Führung 29 befestigt, die den Tragarm 11 in dessen Längsrichtung (Y-Richtung) hin- und herverschiebbar führt.

Der Tragarm 11 besitzt einen inneren Führungsabschnitt 30 und einen äußeren Führungsabschnitt 31. Während der innere Führungsabschnitt 30 in der Führung 29 des Auslegers 9 läuft, trägt der äußere Führungsabschnitt 31 den Transportkopf 12, welcher zu diesem Zweck mit einem U-förmigen, den äußeren Führungsabschnitt 31 umgebenden Führungsteil 32 ausgestattet ist.

Auf der Unterseite des Führungsteiles 32 des Transportkopfes 12 ist die Befestigungsplatte 13 angeordnet, welche - wie bereits im Zusammenhang mit der Fig. 2 erläutert - untereinander den Drehkranz 14, die Tastanordnung 15 und die Linearschlittenanordnung 16 trägt.

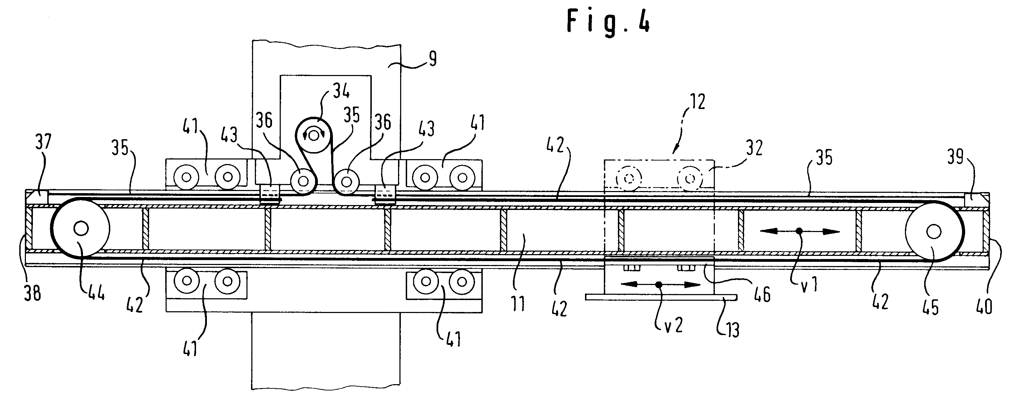

Ein bevorzugtes Ausführungsbeispiel eines gemeinsamen Antriebes zur Längsverschiebung des Tragarmes 9 in der Führung 29 des Auslegers 9 und zum Längsverfahren des Transportkopfes 12 am Tragarm 11 ist in Fig. 4 schematisch dargestellt. Über einen Stellmotor 33 (vgl. Fig. 2 und 3) wird ein Antriebsritzel 34 nach der einen oder anderen Richtung angetrieben. Das Antriebsritzel 34 ist von einem ersten endlichen Zahnriemen 35 umschlungen, der über zwei am Ausleger 9 befestigte Umlenkrollen 36 geführt ist und sich im wesentlichen parallel zum Tragarm 11 erstreckt. Das eine Ende des endlichen Zahnriemens 35 ist über ein Befestigungselement 37 im Bereich des einen Stirnendes 38, und das andere Ende des Zahnriemens 35 über ein Befestigungselement 39 im Bereich des gegenüberliegenden Stirnendes 40 des Tragarmes 11 befestigt.

Wird der Stellmotor 33, und damit das Antriebsritzel 34 betätigt, so verschiebt sich der Tragarm 11 je nach Drehrichtung des Antriebsritzels 34 in der Führung 29 des Auslegers 9 nach der einen oder anderen Richtung. Die Führung 29 ist in Figur 4 durch Doppelrollenanordnungen 41 angedeutet.

Der gemeinsame Antrieb umfaßt ferner einen zweiten Zahnriemen 42, der im vorliegenden Ausführungsbeispiel als endlicher Zahnriemen ausgebildet ist, der mit seinen Enden über Befestigungselemente 43 an dem Ausleger 9 festgelegt ist. Der Tragarm 11 besitzt sowohl im Bereich seines Stirnendes 38 als auch im Bereich seines Stirnendes 40 jeweils Umlenkrollen 44, 45, über die der zweite Zahnriemen 42 derart geführt ist, daß sein Obertrum und sein Untertrum im wesentlichen jeweils parallel zur Längsachse des Tragarmes 11 verlaufen.

Wie im Zusammenhang mit den Fig. 2 und 3 bereits erläutert, ist der Transportkopf 12 mit seinem Führungsteil 32 an dem Tragarm 11 hin- und herverschiebbar gelagert. Im Bereich seines Führungsteiles 32 besitzt der Transportkopf eine Klemmplatte 46, über die der Transportkopf 12 an das Untertrum des zweiten Zahnriemens 42 angekoppelt ist. Die Anordnung ist dabei derart getroffen, daß sich der Transportkopf in der Verlängerung des Auslegers 9 befindet, wenn der Tragarm 11 aus der Führung 29 des Auslegers 9 nach beiden Seiten um den selben Betrag herausragt.

Aufgrund der Ankoppelung des Transportkopfes über die Klemmplatte 46 an das Untertrum des zweiten Zahnriemens 42 ergibt sich im Zusammenwirken mit dem ersten Zahnriemen 35 folgender erfindungsgemäßer Effekt:
Wird das Ritzel 34 über den Stellmotor 33 in der einen oder anderen Richtung mit einer vorgegebenen Drehzahl gedreht, so läuft der Tragarm 11 mit der Geschwindigkeit v1 aus der Führung 29 des Auslegers 9 nach der einen oder anderen Richtung heraus. Bei dieser Verfahrbewegung werden die beiden Umlenkrollen 44 und 45 des Tragarmes 11 zusammen mit dem Tragarm 11 verfahren, während das Obertrum des zweiten Zahnriemens 42 aufgrund seiner Befestigung über die Befestigungselemente 43 feststeht. Dies hat zur Folge, daß sich das Untertrum des zweiten Zahnriemens 42 mit der doppelten Geschwindigkeit des Tragarmes 11, d.h. mit $2 \times v1 = v2$ bewegt. Da das Untertrum des zweiten Zahnriemens 42 über die Klemmplatte 46 jedoch an den Transportkopf 12 angekoppelt ist, bewegt sich der Transportkopf 12 zwangsläufig ebenfalls mit der doppelten Geschwindigkeit des Tragarmes, und damit mit der Geschwindigkeit v2.

Die Längenverhältnisse sind bei der Anordnung gemäß Fig. 4 dabei derart bemessen, daß sich der Tragarm 11 jeweils in seiner vollständig ausgefahrenen Stellung befindet, wenn der Transportkopf 12 seine äußerste Lage erreicht hat.

Wie eingangs bereits erwähnt, ist am unteren Ende des Transportkopfes 12 die Befestigungsplatte 13 befestigt, an dessen Unterseite der Drehkranz 14 angeordnet ist. Der Drehkranz 14 ist derart gestaltet, daß die Tastanordnung 15 und die Linearschlittenanordnung 16, und damit die Saugtraverse 17 mit den Einzelsaugern 18 in jede beliebige Stellung um die C-Achse gedreht, und damit das jeweilige plattenförmige Werkstück in die jeweils gewünschte Lage auf dem Bearbeitungstisch 2a des Bearbeitungszentrums 2 plaziert oder in jeder beliebigen Lage auf der Speicheranordnung 3 abgelegt werden kann.

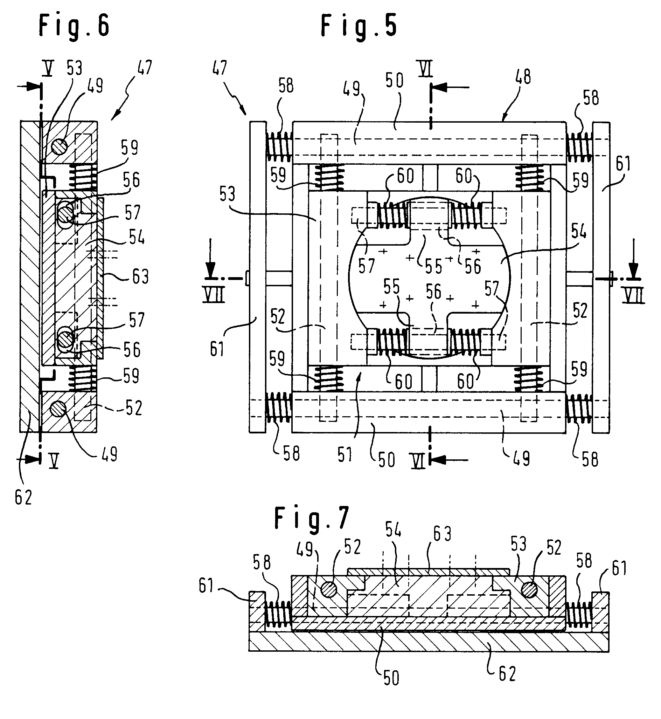

Wie eingangs bereits erwähnt, ist auf der Unterseite des Drehkranzes 14 die Tastanordnung 15 befestigt. Ein bevorzugtes Ausführungsbeispiel einer derartigen Tastanordnung ist in den Fig. 5 bis 7 dargestellt. Die Tastanordnung ist im vorliegenden Ausführungsbeispiel als eine in einer horizontalen Ebene wirksame Kreuzschlittenanordnung 47 ausgestaltet. Diese Kreuzschlittenanordnung 47 besteht aus einer ersten Geradführung 48, die von zwei parallel zueinander verlaufenden Führungsstangen 49 gebildet wird. Auf den Führungsstangen 49 ist ein erster Schlitten 50 hin- und herschiebbar gelagert. In dem ersten Schlitten 50 ist eine 90° zur ersten Geradführung 48 versetzt ausgerichtete Geradführung 51 angeordnet, die ebenfalls aus zwei parallel zueinander verlaufenden Führungsstangen 52 besteht. Auf den Führungsstangen 52 ist ein zweiter Schlitten 53 hin- und herverfahrbar gelagert.

In dem zweiten Schlitten 53 ist ein Drehanordnung 53 in Form einer Drehplatte 54 um die C-Achse drehbar gelagert. Die Drehplatte 54 ist im vorliegenden Fall etwa sternförmig und besitzt zwei Arme 55, die mit Bohrungen 56 ausgestattet sind, durch welche sich Führungsstangen 57 hindurcherstrecken, die mit ihren Enden im zweiten Schlitten 53 festgelegt sind. Der Durchmesser der Bohrungen 56 der Drehplatte 24 ist derart groß gegenüber dem Durchmesser der Führungsstangen 57 gewählt, daß sich die Drehplatte 54 um einen bestimmten Drehwinkel nach der einen oder anderen Richtung frei verdrehen läßt.

Auf den Führungsstangen 49, 52 und 57 sind Druckfedern 58, 59 und 60 derart angeordnet, daß sowohl der erste Schlitten 50 als auch der zweite Schlitten 53 und die Drehplatte jeweils von den eine Federanordnung bildenden Druckfedern in einer Ruhelage gehalten werden, aus der sie gegen die Kraft der Federanordnung über einen begrenzten Weg bzw. Drehwinkel aus der Ruhelage nach der einen oder anderen Richtung auslenkbar bzw. verdrehbar sind.

Wie aus den Fig. 6 und 7 hervorgeht, sind die Führungsstangen 49 der ersten Geradführung 48 jeweils an Traversen 61 befestigt, die auf einer Grundplatte 62 angeordnet sind. Diese Grundplatte 62 ist auf der Unterseite des Drehkranzes 14 befestigt.

Die Drehplatte 54 wiederum trägt, wie aus den Fig. 6 und 7 ebenfalls zu ersehen ist, eine Platte 63, an welcher die Linearschlittenanordnung 16, und damit die Saugtraverse 17 befestigt ist.

Durch eine nicht dargestellte Feststellanordnung können der erste Schlitten 50, der zweite Schlitten 53 und die Drehplatte 54 in ihrer Ruhelage festgeklemmt werden. Die aus den Druckfedern 58, 59 und 60 gebildeten Federanordnungen sind in dieser Phase unwirksam. Wird die Feststellanordnung jedoch gelöst, so sind die Saugtraverse 17, und damit auch die von den Einzelsaugern 18 gehaltenen plattenförmigen Werkstücke jeweils gegen die Kraft der Druckfedern der Federanordnungen über einen begrenzten Weg um eine zur X-Richtung parallele X2-Richtung, eine 90° dazu verlaufende, d.h. zur Y-Richtung parallele Y2-Richtung und um die C-Achse in C1-Richtung auslenkbar bzw. verdrehbar.

Wird nun ein plattenförmiges Werkstück bei gelöster Feststellanordnung durch die Kreuzschlittenanordnung gegen auf dem Arbeitstisch 2a des Bearbeitungszentrums 2 angeordnete Anschläge gefahren, so stellt sich das plattenförmige Werkstück automatisch in die durch die Anschläge vorgegebene Lage und wird somit mit einfachen technischen Mitteln vollkommen selbsttätig präzise positioniert.

**Patentansprüche**

1. Vorrichtung zur Handhabung von plattenförmigen Werkstücken mit:

   - einer vertikal verlaufenden Tragsäule (7), die in einer horizontalen Ebene in X-Richtung verfahrbar ist,

   - einem an der Tragsäule (7) in Z-Richtung auf- und abbewegbar geführten Tragschlitten (8),

   gekennzeichnet durch

   - einen sich in einer horizontalen Ebene in X-Richtung erstreckenden Ausleger (9), der am Tragschlitten (8) befestigt ist,

   - einen sich in horizontaler Ebene senkrecht zum Ausleger (9) erstreckenden Tragarm (11), der am freien Ende des Auslegers (9) derart angeordnet ist, daß er im wesentlichen über seine ganze Länge in horizontaler Ebene gegenüber dem Ausleger (9) verschiebbar ist, und

   - eine mit Einzelsaugern (10) ausgestattete, um eine vertikale Achse (C-Achse) drehbare Saugtraverse (17), die am Tragarm (11) beweglich angeordnet ist, so daß sie im wesentlichen über die ganze Länge des Tragarms (11) verschiebbar ist.

2. Vorrichtung nach Anspruch 1,
   dadurch **gekennzeichnet,**
   daß die Saugtraverse (17) an einem Transportkopf (12) befestigt ist, der an dem Tragarm (11) in Y2-Richtung verschiebbar geführt ist.

3. Vorrichtung nach Anspruch 2,
   dadurch **gekennzeichnet,**

daß zwischen dem Transportkopf (12) und der Saugtraverse ein Drehkranz (14) angeordnet ist, über den die Saugtraverse um die vertikale Achse (C-Achse) drehbar ist.

4. Vorrichtung nach Anspruch 3,
   dadurch **gekennzeichnet,**
   daß der Drehkranz (14) einen pneumatischen oder elektrischen Antrieb aufweist.

5. Vorrichtung nach Anspruch 2,
   dadurch **gekennzeichnet,**
   daß zwischen dem Transportkopf (12) und der Saugtraverse (17) eine Tastanordnung (15) vorgesehen ist.

6. Vorrichtung nach Anspruch 5,
   dadurch **gekennzeichnet,**
   daß die Tastanordnung (15) eine in einer horizontalen Ebene wirksame Kreuzschlittenanordnung (47) aufweist.

7. Vorrichtung nach Anspruch 6,
   dadurch **gekennzeichnet,**
   daß die Kreuzschlittenanordnung (47) einen in einer ersten Geradführung (48) geführten ersten Schlitten (50) aufweist, der eine zweite, senkrecht zur ersten Geradführung wirksame Geradführung trägt (51), in der ein zweiter Schlitten (53) geführt ist.

8. Vorrichtung nach Anspruch 6 und 7,
   dadurch **gekennzeichnet,**
   daß der erste (50) und der zweite Schlitten (53) über Federanordnungen in einer Ruhelage gehalten sind, aus der sie gegen die Kraft der Federanordnung über einen begrenzten Weg nach der einen oder der anderen Richtung auslenkbar sind.

9. Vorrichtung nach Anspruch 8,
   dadurch **gekennzeichnet,**
   daß die Federanordnung eine mechanische oder pneumatische Federanordnung ist.

10. Vorrichtung nach Anspruch 6 bis 9,
    dadurch **gekennzeichnet,**
    daß der zweite Schlitten (53) eine Drehanordnung trägt, an die die Saugtraverse (17) ankoppelbar ist.

11. Vorrichtung nach Anspruch 10,
    dadurch **gekennzeichnet,**
    daß die Drehanordnung eine Drehplatte (54) aufweist, die um eine vertikale Achse (C-Achse) in dem zweiten Schlitten (53) über einen begrenzten Drehwinkel verdrehbar gelagert ist und an die die Saugtraverse (17) ankuppelbar ist.

12. Vorrichtung nach Anspruch 11,
    dadurch **gekennzeichnet,**
    daß die Drehplatte (54) über eine Federanordnung in einer Ruhelage gehalten ist, aus der sie gegen die Kraft der Federanordnung über den begrenzten Drehwinkel in der einen oder anderen Drehrichtung auslenkbar ist.

13. Vorrichtung nach Anspruch 12,
dadurch **gekennzeichnet,**
daß die Federanordnung eine mechanische oder pneumatische Federanordnung ist.

14. Vorrichtung nach Anspruch 2,
dadurch **gekennzeichnet,**
daß zwischen dem Transportkopf (12) und der Saugtraverse (17) eine in einer horizontalen Ebene arbeitende Linearschlittenanordnung (16) vorgesehen ist.

15. Vorrichtung nach Anspruch 14,
dadurch **gekennzeichnet,**
daß die Linearschlittenanordnung (16) eine Grundplatte aufweist, auf der eine Ankoppelungsplatte linear verschiebbar geführt ist.

16. Vorrichtung nach Anspruch 15,
dadurch **gekennzeichnet,**
daß die Ankoppelungsplatte durch einen mechanischen, pneumatischen oder hydraulischen Stellantrieb gegenüber der Grundplatte verschiebbar ist.

17. Vorrichtung nach einem oder mehreren der vorhergehenden Ansprüche 3 bis 16,
dadurch **gekennzeichnet**,
daß der Drehkranz (14), die Tastanordnung (15) und die Linearschlittenanordnung (16) einzeln oder in beliebiger Kombination zueinander zwischen dem Transportkopf (12) und der Saugtraverse (17) angeordnet sind.

18. Vorrichtung nach einem oder mehreren der vorhergehenden Ansprüche 3 bis 16,
dadurch **gekennzeichnet,**
daß an dem Transportkopf (12) der Drehkranz (14) befestigt ist, welcher die Tastanordnung (15) trägt, an der die Linearschlittenanordnung (16) angeordnet ist, an welcher die Saugtraverse (17) befestigt ist.

19. Vorrichtung nach einem oder mehreren der Ansprüche 1 bis 18,
dadurch **gekennzeichnet,**
daß die Saugtraverse (17) über eine Schnellwechseleinrichtung mit der Linearschlittenanordnung (16), der Tastanordnung (15), dem Drehkranz (14) oder dem Transportkopf (12) verbindbar ist.

20. Vorrichtung nach einem oder mehreren der Ansprüche 1 bis 19,
dadurch **gekennzeichnet,**

daß die Saugtraverse (17) aus einer Rahmen- oder Kreuzanordnung besteht, die auf ihrer Unterseite eine Anzahl von Einzelsaugern (18) trägt.

21. Vorrichtung nach Anspruch 20,
dadurch **gekennzeichnet,**
daß die Einzelsauger (18) einzeln, in Gruppen oder gemeinsam betätigbar sind.

22. Vorrichtung nach Anspruch 20 oder 21,
dadurch **gekennzeichnet,**
daß die Einzelsauger (18) zumindest teilweise mit Ausstellschlitten (19) ausgestattet sind, über die sie in vertikaler Richtung (Z1-Richtung) über einen bestimmten Weg aus- und einfahrbar sind.

23. Vorrichtung nach Anspruch 22,
dadurch **gekennzeichnet,**
daß die Ausstellschlitten (19) mechanisch oder über pneumatische Zylinder betätigbar sind.

24. Vorrichtung nach Anspruch 1 und 2,
dadurch **gekennzeichnet,**
daß zur Längsverschiebung des Tragarmes (11) an dem Tragschlitten (8) und zum Längsverfahren des Transportkopfes (12) am Tragarm (11) jeweils ein getrennter Antrieb vorgesehen sind.

25. Vorrichtung nach Anspruch 1 oder 2,
dadurch **gekennzeichnet,**
daß zur Längsverschiebung des Tragarmes (11) an dem Tragschlitten (8) und zum Längsverfahren des Transportkopfes (12) am Tragarm (11) ein gemeinsamer Antrieb vorgesehen ist.

26. Vorrichtung nach Anspruch 25,
dadurch **gekennzeichnet**,
daß der Antrieb zwei Zahnriementriebe (34, 35, 36, 42 und 42, 44, 45, 46) umfaßt.

27. Vorrichtung nach Anspruch 25 und 26,
dadurch **gekennzeichnet,**
daß am freien Ende des Auslegers (9) ein Stellmotor (33) angeordnet ist, der über ein Antriebsritzel (34) auf einen ersten endlichen Zahnriemen (35) einwirkt, der sich im wesentlichen parallel zum Tragarm (11) erstreckt und mit seinem einen Ende im Bereich des einen Stirnendes (38) des Tragarmes und mit seinem anderen Ende im Bereich des anderen gegenüberliegenden Stirnendes (40) des Tragarmes befestigt ist.

28. Vorrichtung nach Anspruch 25 bis 27,
dadurch **gekennzeichnet,**

- daß an dem Tragarm (11) im Bereich seiner Stirnenden (38, 40) jeweils eine Umlenkrolle (44, 45) für einen diesen umschlingenden zweiten Zahnriemen (42) vorgesehen ist, dessen sich jeweils zwischen den Umlenkrollen verlaufendes Ober- und Untertrum im wesentlichen jeweils parallel zur Längsachse des Tragarmes (11) verläuft, und

- daß das Obertrum an dem Ausleger (9) festgelegt und der Transportkopf (12) an das Untertrum angekoppelt ist.

29. Vorrichtung nach Anspruch 1,
dadurch **gekennzeichnet**, daß
der Ausleger (9) teleskopartig aus- und einfahrbar ist.

30. Vorrichtung nach einem oder mehreren der vorhergehenden Ansprüche 1 bis 29,
dadurch **gekennzeichnet**, daß
die Saugtraverse (17) über ein Kippsegment kippbar an dem Transportkopf angelenkt ist.

31. Vorrichtung nach Anspruch 5 bis 13,
dadurch **gekennzeichnet**, daß
die Tastanordnung eine Feststellanordnung aufweist, mit welcher die Bewegung der Saugtraverse (17) gegenüber dem Transportkopf (12) beim Positioniervorgang freigebbar und ansonsten sperrbar ist.

**Claims**

1. Apparatus for handling plate-shaped workpieces, with

   - a vertically extending supporting column (7) which is movable in the X direction in a horizontal plane,
   - a supporting slide (8) guided on the supporting column (7) so as to be movable up and down in the Z direction,

   characterised by

   - an extension arm (9) which extends in the X direction in a horizontal plane and which is attached to the supporting slide (8),
   - a supporting arm (11) which extends perpendicularly to the extension arm (9) in a horizontal plane and which is arranged at the free end of the extension arm (9) in such a way that it is slidable relative to the extension arm (9) in a horizontal plane essentially over its whole length, and
   - a suction crossbar (17) which is provided with individual aspirators (10) and rotatable about a vertical axis (C axis) and which is arranged movably on the supporting arm (11), so that it is slidable essentially over the whole length of the supporting arm (11).

2. Apparatus according to claim 1, characterised in that the suction crossbar (17) is attached to a transport head (12) which is guided on the supporting arm (11) so as to be slidable in the Y2 direction.

3. Apparatus according to claim 2, characterised in that between the transport head (12) and the suction crossbar is arranged a rotating track (14) by which the suction crossbar is rotatable about the vertical axis (C axis).

4. Apparatus according to claim 3, characterised in that the rotating track (14) comprises a pneumatic or electric drive.

5. Apparatus according to claim 2, characterised in that between the transport head (12) and the suction crossbar (17) is provided a scanning assembly (15).

6. Apparatus according to claim 5, characterised in that the scanning assembly (15) comprises a cross slide assembly (47) operating in a horizontal plane.

7. Apparatus according to claim 6, characterised in that the cross slide assembly (47) comprises a first slide (50) which is guided in a first straight-line mechanism (48) and which carries a second straight-line mechanism (51) which operates perpendicularly to the first straight-line mechanism and in which is guided a second slide (53).

8. Apparatus according to claims 6 and 7, characterised in that the first (50) and second (53) slides are held by spring assemblies in a rest position from which they can be deflected in one or the other direction over a limited distance against the force of the spring assembly.

9. Apparatus according to claim 8, characterised in that the spring assembly is a mechanical or pneumatic spring assembly.

10. Apparatus according to claims 6 to 9, characterised in that the second slide (53) carries a rotating assembly to which the suction crossbar (17) can be coupled.

11. Apparatus according to claim 10, characterised in that the rotating assembly comprises a turntable (54) which is mounted so as to be rotatable about a vertical axis (C axis) in the second slide (53) through a limited angle of rotation and to which the suction crossbar (17) can be coupled.

12. Apparatus according to claim 11, characterised in that the turntable (54) is held by a spring assembly in a rest position from which it can be deflected in one or the other direction through the limited angle of rotation against the force of the spring assembly.

13. Apparatus according to claim 12, characterised in that the spring assembly is a mechanical or pneumatic spring assembly.

14. Apparatus according to claim 2, characterised in that between the transport head (12) and the suction crossbar (17) is provided a linear slide assembly (16) operating in a horizontal plane.

15. Apparatus according to claim 14, characterised in that the linear slide assembly (16) comprises a base plate on which a coupling plate is guided linearly slidably.

16. Apparatus according to claim 15, characterised in that the coupling plate is slidable relative to the base plate by a mechanical, pneumatic or hydraulic actuator.

17. Apparatus according to one or more of the preceding claims 3 to 16, characterised in that the rotating track (14), the scanning assembly (15) and the linear slide assembly (16) are arranged individually or in any combination with each other between the transport head (12) and the suction crossbar (17).

18. Apparatus according to one or more of the preceding claims 3 to 16, characterised in that attached to the transport head (12) is the rotating track (14) which carries the scanning assembly (15) on which is arranged the linear slide assembly (16) to which the suction crossbar (17) is attached.

19. Apparatus according to one or more of claims 1 to 18, characterised in that the suction crossbar (17) can be connected by a quick-change device to the linear slide assembly (16), the scanning assembly (15), the rotating track (14) or the transport head (12).

20. Apparatus according to one or more of claims 1 to 19, characterised in that the suction crossbar (17) consists of a frame or cross assembly which on its lower side carries a number of individual aspirators (18).

21. Apparatus according to claim 20, characterised in that the individual aspirators (18) can be actuated individually, in groups or together.

22. Apparatus according to claim 20 or 21, characterised in that the individual aspirators (18) are at least partially equipped with an extension slide (19) by which they are extensible and retractable over a given distance in the vertical direction (Z1 direction).

23. Apparatus according to claim 22, characterised in that the extension slides (19) can be actuated mechanically or by pneumatic cylinders.

24. Apparatus according to claims 1 and 2, characterised in that for longitudinal displacement of the supporting arm (11) on the supporting slide (8) and for longitudinal movement of the transport head (12) on the supporting arm (11) in each case a separate drive is provided.

25. Apparatus according to claim 1 or 2, characterised in that a common drive is provided for longitudinal displacement of the supporting arm (11) on the supporting slide (8) and for longitudinal movement of the transport head (12) on the supporting arm (11).

26. Apparatus according to claim 25, characterised in that the drive includes two toothed belt drives (34, 35, 36, 42 and 42, 44, 45, 46).

27. Apparatus according to claims 25 and 26, characterised in that at the free end of the extension arm (9) is arranged a servo motor (33) which acts via a drive pinion (34) on a first open-ended toothed belt (35) which extends essentially parallel to the supporting arm (11) and is attached by one end in the region of one end (38) of the supporting arm and by its other end in the region of the other opposite end (40) of the supporting arm.

28. Apparatus according to claims 25 to 27, characterised in that

   - on the supporting arm (11) in the region of its ends (38, 40) is provided in each case a guide roller (44, 45) for a second toothed belt (42) which wraps around the latter and of which the upper and lower runs running in each case between the guide rollers extend in each case essentially parallel to the longitudinal axis of the supporting arm (11), and
   - the upper run is fixed to the extension arm (9) and the transport head (12) is coupled to the lower run.

29. Apparatus according to claim 1, characterised in that the extension arm (9) is telescopically extensible and retractable.

30. Apparatus according to one or more of the preceding claims 1 to 29, characterised in that the suction crossbar (17) is linked tiltably by a tilt segment to the transport head.

31. Apparatus according to claims 5 to 13, characterised in that the scanning assembly comprises a locking assembly with which the movement of the suction crossbar (17) relative to the transport head (12) can be freed during the positioning operation and otherwise can be blocked.

## Revendications

1. Dispositif pour la manutention de pièce d'ouvrage en plaque comportant :

   - une colonne support (7) s'étendant verticalement, déplaçable dans un plan horizontal, dans la direction X,
   - un chariot support (8) guidé de façon à pouvoir monter et descendre dans la direction Z, sur la colonne support (7),
     caractérisé par
   - un bras (9) s'étendant dans un plan horizontal dans la direction X et fixé au chariot support (8),
   - un bras de support (11) s'étendant dans un plan horizontal perpendiculairement par rapport au bras (9) et disposé à l'extrémité libre du bras (9) de manière à être déplaçable sensiblement sur toute sa longueur dans le plan horizontal par rapport au bras (9), et
   - une traverse d'aspiration (17), équipée de ventouses individuelles (17), susceptible de tourner autour d'un axe vertical (axe C) et disposée mobile sur le bras support (11) de manière à pouvoir être déplacée sensiblement sur toute la longueur du bras support (11).

2. Dispositif selon la revendication 1, caractérisé en ce que la traverse d'aspiration (17) est fixée sur une tête de transport (12) guidée déplaçable dans la direction YZ sur le bras support (11).

3. Dispositif selon la revendication 2, caractérisé en ce qu'une couronne dentée (14), par l'intermédiaire de laquelle la traverse d'aspiration peut tourner autour de l'axe verticale (axe C), est disposée entre la tête de transport (12) et la traverse d'aspiration.

4. Dispositif selon la revendication 3, caractérisé en ce que la couronne dentée (14) présente un entraînement pneumatique ou électrique.

5. Dispositif selon la revendication 2, caractérisé en ce qu'entre la tête de transport (12) et la traverse d'aspiration (17) est prévu un dispositif palpeur (15).

6. Dispositif selon la revendication 5, caractérisé en ce que le dispositif palpeur (15) présente un agencement à chariot croisé (47) agissant dans un plan horizontal.

7. Dispositif selon la revendication 6, caractérisé en ce que le dispositif à chariot croisé (47) présente un premier chariot (50) guidé dans un premier guidage rectiligne (48) et portant un deuxième guidage rectiligne (51) agissant perpendiculairement par rapport au premier guidage rectiligne et dans lequel est disposé un deuxième chariot (53).

8. Dispositif selon les revendications 6 à 7, caractérisé en ce que le premier chariot (50) et le deuxième chariot (53) sont maintenus en position de repos par l'intermédiaire de dispositif élastique, position de repos d'où ils peuvent être déplacés à l'encontre de la force du dispositif élastique sur la valeur d'une course limitée, dans l'une ou l'autre direction.

9. Dispositif selon la revendication 8, caractérisé en ce que le dispositif élastique est un dispositif élastique mécanique ou pneumatique.

10. Dispositif selon les revendications 6 à 9, caractérisé en ce que le deuxième chariot (53) porte un dispositif de rotation auquel la traverse d'aspiration (17) peut être accouplée.

11. Dispositif selon la revendication 10, caractérisé en ce que le dispositif tournant présente une plaque tournante (54) montée de façon à pouvoir tourner autour d'un axe vertical (axe C) dans le deuxième chariot (53), de la valeur d'un angle de rotation limité, et à laquelle la traverse d'aspiration (17) peut être accouplée.

12. Dispositif selon la revendication 11, caractérisé en ce que la plaque tournante (54) est maintenue en position de repos par l'intermédiaire d'un dispositif élastique, position de repos d'où elle peut être déplacée à l'encontre de la force du dispositif élastique, sur la valeur d'une course de rotation limitée, dans l'un ou l'autre sens de rotation.

13. Dispositif selon la revendication 12, caractérisé en ce que le dispositif élastique est un dispositif élastique mécanique ou pneumatique.

14. Dispositif selon la revendication 2, caractérisé en ce qu'entre la tête de transport (12) et la traverse d'aspiration (17) est prévu un dispositif à chariot linéaire (16) travaillant dans un plan horizontal.

15. Dispositif selon la revendication 14, caractérisé en ce que le dispositif à chariot linéaire (16) présente une plaque de base sur laquelle une plaque d'accouplement est guidée d'une façon permettant un déplacement linéaire.

16. Dispositif selon la revendication 15, caractérisé en ce que la plaque d'accouplement est déplaçable par rapport à la plaque de base au moyen d'un servoentraînement mécanique, pneumatique ou hydraulique.

17. Dispositif selon une ou plusieurs des revendications 3 à 16, caractérisé en ce que la couronne dentée (14), le dispositif palpeur (15) et le dispositif à chariot linéaire (16) sont disposés, individuellement ou en une combinaison quelconque entre eux, entre la tête de transport (12) et la traverse d'aspiration (17).

18. Dispositif selon une ou plusieurs des revendications précédentes 3 à 16, caractérisé en ce que sur la tête de transport (12) est fixée la couronne dentée (14) qui porte le dispositif palpeur (15) sur lequel est disposé le dispositif à chariot linéaire (16) auquel est fixée la traverse d'aspiration (17).

19. Dispositif selon une ou plusieurs des revendications précédentes 1 à 18, caractérisé en ce que la traverse d'aspiration (17) est susceptible d'être reliée par un dispositif de changement rapide au dispositif à chariot linéaire (16), au dispositif palpeur (15), à la couronne dentée (14) ou à la tête de transport (12).

20. Dispositif selon une ou plusieurs des revendications précédentes 1 à 19, caractérisé en ce que la traverse d'aspiration (17) est constituée d'un dispositif à cadre ou en croix portant en face inférieure une pluralité de ventouses individuelles (18).

21. Dispositif selon la revendication 20, caractérisé en ce que les ventouses individuelles (18) sont actionnables individuellement, par groupes, ou conjointement.

22. Dispositif selon la revendication 20 ou 21, caractérisé en ce que les ventouses individuelles (18) sont équipées au moins partiellement de chariots de présentation (19), par l'intermédiaire desquels elles sont déployables et rétractables de la valeur d'une course déterminée en direction verticale (direction Z1).

23. Dispositif selon la revendication 22, caractérisé en ce que les chariots de présentation (19) sont actionnables mécaniquement ou par l'intermédiaire de vérins pneumatiques.

24. Dispositif selon les revendications 1 et 2, caractérisé en ce qu'un entraînement séparé est chaque prévu pour assurer le déplacement longitudinal du bras support (11) sur le chariot support (8) et pour assurer le déplacement longitudinal de la tête de transport (12) sur le bras support (11).

25. Dispositif selon la revendication 1 ou la revendication 2, caractérisé en ce qu'un entraînement commun est prévu pour assurer le déplacement longitudinal du bras support (11) sur le chariot support (8) et pour assurer le déplacement longitudinal de la tête de transport (12) sur le bras support (11).

26. Dispositif selon la revendication 25, caractérisé en ce que l'entraînement comprend deux transmissions à courroie crantée (34, 35, 36, 42 et 42, 44, 45, 46).

27. Dispositif selon les revendications 25 et 26, caractérisé en ce que à l'extrémité libre du bras (9) est disposé un servomoteur (33) qui agit par l'intermédiaire d'un pignon d'entraînement (34), sur une première courroie crantée (35) à bout libre, s'étendant sensiblement parallèlement au bras support (11) et fixée, par une première de ses extrémités, dans la zone d'une extrémité frontale (38) des bras supports et, par son autre extrémité, dans la zone de l'autre extrémité frontale (40) opposée du bras support.

28. Dispositif selon les revendications 25 à 27, caractérisé en ce que

   - sur le bras support (11) est prévu dans la zone de chacune de ses extrémités frontales (38, 40) un rouleau de renvoi (45, 46) destiné à une deuxième courroie crantée (42) enlaçant celui-ci, courroie crantée dont chaque fois le brin supérieur et le brin inférieur s'étendant entre les rouleaux de renvoi s'étendent sensiblement chacun parallèlement à l'axe longitudinal du bras support (11), et
   - en ce que le brin supérieur est fixé au bras (9) et la tête de transport est accouplée au bras inférieur.

29. dispositif selon la revendications 1, caractérisé en ce que le bras (9) est réalisé de façon à pouvoir se déployer se rétracter de façon télescopique.

30. dispositif selon l'une ou plusieurs des revendications précédentes 1 à 29, caractérisé en ce que la traverse d'aspiration (17) est articulée sur la tête de transport par l'intermédiaire d'un segment basculant, d'une façon permettant un basculement.

31. dispositif selon les revendications 5 à 13, caractérisé en ce que le dispositif de palpage présente un dispositif de fixation, à l'aide duquel le déplacement de la traverse d'aspiration (17) par rapport tête de transport (12) peut être libéré et autrement bloqué lors du processus de positionnement.

# Fig.1

# Fig. 2

# Fig.3

Fig. 4

EP 0 512 126 B1

# Fig.6

# Fig.5

# Fig.7